# EUROPEAN PATENT APPLICATION

(11) **EP 1 378 897 A1**
(43) Date of publication of application: **07.01.2004**
(21) Application number: 02717136.2
(22) Date of filing: 12.04.2002
(51) Int. Cl.: G11B 7/26

(54) **METHOD OF LAMINATING OPTICAL DISKS**

(30) Priority: 13.04.2001 JP 2001116040
(71) Applicant: Kitano Engineering Co., Ltd., Komatsushima-shi, Tokushima-ken 773-0008 (JP)
(72) Inventor: KITANO, Ryoko, Kitano Engineering Co., Ltd., Komatsushima-shi, Tokushima 773-0008 (JP); AMO, Mikuni, Kitano Engineering Co., Ltd., Komatsushima-shi, Tokushima 773-0008 (JP); INOUCHI, Masami, Kitano Engineering Co., Ltd., Komatsushima-shi, Tokushima 773-0008 (JP)
(74) Representative: Goddar, Heinz J., Dr.
(86) International application number: PCT/JP2002/003681
(87) International publication number: WO 2002/084659

(57) **Abstract**

An adhesive agent is applied to both single plates, upper and lower, in which case the formation of bubbles is minimized by using a specified application manner. A method of laminating optical disks (D) comprising the steps of placing a lower disk single sheet (D1) on a turntable (1), applying an adhesive agent (R1) in doughnut form to the lower disk single sheet (D1), placing an upper disk single sheet (D2) on another turntable (2), applying an adhesive agent (R2) in doughnut form to the upper disk single sheet (D2), placing the upper disk single sheet (D2) on the lower disk single sheet (D1 ) , and spreading the adhesive agent (%2) between the two disk single sheets by rotating the turntables. Since bubbles hardly enter the adhesive agent, the bubble content of the adhesive agent after spreading is very small, and even after the curing subsequent to ultraviolet ray radiation, the air content of the optical disk can be minimized, the quality being high.

## Description

### Technical Field

### (Technical Field Pertinent to the Invention)

This invention relates to a method of laminating optical disks. More particularly it relates to a method of laminating optical disks wherein the formation of bubbles is minimized.

### Background Art

### (Prior Art)

Lately optical disks have grown larger in their capacity and have further improved in terms of their information reading function.

Among optical disks, a DVD for example is made by laminating and integrating two thin disk single plates, and requires a strict qualitative completeness in order to read information from perforated pits with laser beam.

At present an integrated DVD is manufactured by laminating two disk single plates (disk substrates) by a type of adhesive agent.

The laminating method consists of, for example as shown in Fig. 9, placing a lower disk single sheet D1 on the turntable (A), applying ultraviolet cure resin constituting an adhesive agent R in the doughnut form (ring form) on the lower disk single sheet D1 placed on the turntable A (B), and then placing an upper disk single sheet D2 thereon (C).

Then, both of them are rotated simultaneously and the ultraviolet cure resin sandwiched between the two disk single sheets is spread extensively by the centrifugal force on the whole of the substrate.

Finally, both disk single sheets are irradiated with ultraviolet rays to cure the ultraviolet cure resin that has spread out (E) . And when both disk single sheets are integrated, an optical disk is completed.

In this case, the adhesive agent R is applied only on the lower disk single sheet D1 while the upper disk single sheet D2 is left without the same and both of them are integrated.

As a result, when the upper disk single sheet D2 is placed on the lower disk single sheet D1 for lamination, the viscous adhesive agent applied on the lower disk single sheet comes into direct contact with the hard surface of the upper disk single ,sheet D2 and changes form.

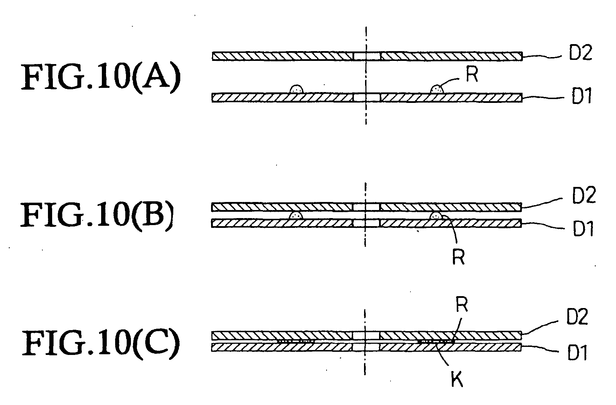

At this initial contact, the adhesive agent R acts on the hard surface of the upper disk single sheet in such a way as to enclose (or draw in) air leading to bubbles K being contained in the adhesive agent. (See Fig. 10 (A) → (B) → (C).)

Especially when the upper disk single sheet warps downward, the surface of the upper disk single sheet behave in such a way that air would be confined inward (in the direction of the central hole. Thus, bubbles are further confined.

When bubbles K are contained in the adhesive agent R, they remain even after the adhesive agent has spread out.

As a result, even in the products after the hardening of the adhesive agent the bubbles are fixed within the adhesive agent. This hinders the reading of information with laser beams and constitutes a qualitative problem.

For this reason, attempts have been made to eliminate such predicaments by applying an adhesive agent on both the upper and lower disk single sheets. However, no satisfactory results have been obtained.

This invention has been made intending to solve such problems. (The problem that this invention tries to solve)

Thus, it is the object of this invention to provide a method of laminating optical disks that enables to produce high quality optical disks with a minimum level of bubbles.

### Disclosure of the Invention

### (Means for solving the problem)

This invention is based on the finding that the amount of bubbles can be minimized by applying the adhesive agent on both upper and lower disk single sheets and by specifying the mode of application of the adhesive agent made by the inventors as a result of intense study.

In other words, this invention relates (1) to a method of laminating optical disks wherein an adhesive agent lying between two upper and lower disk single sheets is cured to integrate both single sheets and the adhesive agent is applied in such a way that the adhesive agent applied on the lower disk single sheet (D1) and the same applied on the upper disk single sheet (D2) would touch each other first between themselves.

And this invention relates (2) to a method of laminating optical disks wherein the amount of the adhesive agent applied on the upper disk single sheet (D2) is smaller than the amount of the adhesive agent applied on the lower single sheet (D1).

And this invention relates (3) to a method of laminating optical disks (D) wherein an adhesive agent in doughnut form smaller in diameter than the adhesive agent in doughnut form of the lower disk single sheet (D1) is applied to the upper disk single sheet (D2).

And this invention relates (4) to a method of laminating optical disks (D) wherein an adhesive agent in doughnut form larger in diameter than the adhesive agent in doughnut form of the lower disk single sheet (D1) is applied to the upper disk single sheet (D2).

And this invention relates (5) to a method of laminating optical disks (D) wherein the adhesive agent is irradiated with ultraviolet rays to cure the same.

And this invention relates (6) to a method of laminating optical disks (D) comprising the step of placing a lower disk single sheet (D1) on the turntable, the step of applying the adhesive agent in doughnut form on the lower disk single sheet (D1), the step of placing an upper disk single sheet (D1) on the turntable, the step of applying the adhesive agent in doughnut form on the upper disk single sheet (D1), the step of placing the upper disk single sheet (D2) on the lower disk single sheet (D3), and the step of spreading the adhesive agent lying between both disk single sheets by rotating the turntable.

And this invention relates ( 7) to a method of laminating optical disks (D) wherein the amount of adhesive agent applied on the upper disk single sheet (D2) is smaller than the amount of adhesive agent applied on the lower disk single sheet (D1).

And this invention relates (8) to a method of laminating optical disks (D) wherein an adhesive agent in doughnut form smaller in diameter than the adhesive agent in doughnut form of the lower disk single sheet (D1 ) is applied to the upper disk single sheet (D2).

And this invention relates (9) to a method of laminating optical disks (D) wherein an adhesive agent in doughnut form larger in diameter than the adhesive agent in doughnut form of the lower disk single sheet (D1) is applied to the upper disk single sheet (D2).

And this invention relates (10) to a method of laminating optical disks (D) wherein the adhesive agent is irradiated with ultraviolet rays to cure the same.

In the meanwhile, for this invention, any combination of two or more limited constructions chosen from the items 1 to 5 above may be employed provided that they serve for this purpose, and an invention consisting of a combination of two or more limited constructions chosen from the items 6 to 10 above may be adopted.

### (Effect of the invention)

When both disk single sheets are laminated, bubbles barely make their way into the adhesive agent, and therefore the bubble contents of the adhesive agent after spreading are very limited.

And after curing following the irradiation of ultraviolet rays, the air contents of the whole optical disk can be limited to the minimum and therefore the product will have a high quality.

### Brief Description of Drawing

Fig. 1 is a view showing a step of the lamination method.
Fig. 2 consists of views showing another step of the lamination method.
Fig. 3 is a view showing another step of the lamination method.
Fig. 4 consists of views showing another step of the lamination method.
Fig. 5 is a view showing another step of the lamination method.
Fig. 6 consists of views showing the distance between the upper and lower disk single sheets and their relations with the adhesive agent. (A) is a view showing the state of both disk single sheets before lamination, (B) is a view showing the state immediately after the adhesive agents of both disk single sheets have come into contact each other, and (C) is a view showing the state after both disk single sheets are laminated.
Fig. 7 is a view showing a step of irradiating ultraviolet rays.

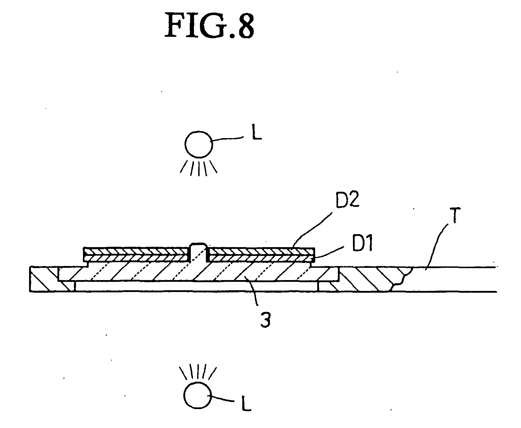

Fig. 8 is a view showing another step of irradiating ultraviolet rays.

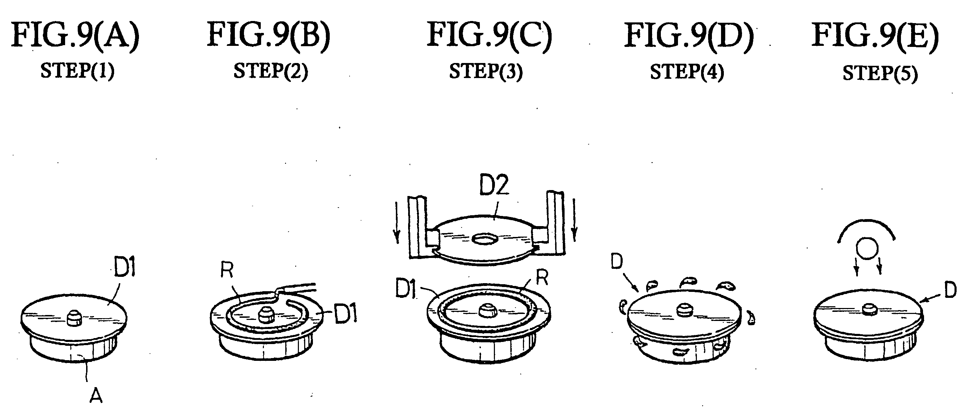

Fig. 9 consists of views showing each step in the traditional laminating method.
Fig. 10 consists of views showing the distance between the upper and lower disk single sheets and their relations with the adhesive agent. (A) is a view showing the state of both disk single sheets before lamination, (B) is a view showing the state immediately after the adhesive agents of both disk single sheets have come into contact each other, and (C) is a view showing the state after both disk single sheets are laminated.

### Best Mode for Carrying Out the Invention

### (Mode for Carrying out the Invention)

This invention relates to a method of laminating optical disks wherein an adhesive agent lying between two upper and lower disk single sheets is cured to integrate the disk single sheets. It is characterized in that the adhesive agent applied on the lower disk single sheet and the adhesive agent applied on the upper disk single sheet are applied in such a way that they come into contact first between themselves.

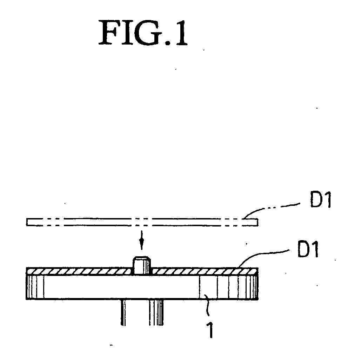

Figs 1 - 5 are views showing the method of laminating optical disks of this invention.

### [Step of Placing a Lower Disk Single Sheet]

To begin with, a lower disk s ingle sheet is placed on the turntable (See Fig. 1).

### [Step of Applying Adhesive Agent on the Lower Disk Single Sheet]

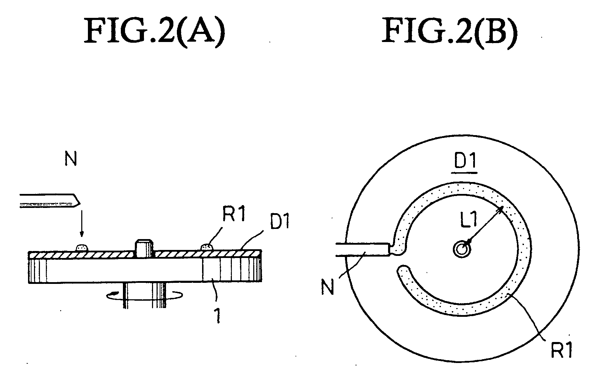

Then, an adhesive agent, in other words an ultraviolet ray curing resin is applied thereon (See Fig. 2).

For this application, the turntable 1 is kept rotating ( several rounds per minute), and when the adhesive agent is discharged from the nozzle N, the adhesive agent is applied in doughnut form on the surface of the lower disk single sheet D1.

In this case, a greater amount of the adhesive agent R1 is applied on the lower disk single sheet D1 than the amount of the adhesive agent R2 applied on the upper disk single sheet D2.

For example, the adhesive agent R1 applied on the lower disk single sheet D1 shall be limited to 2 - 3g, while the adhesive agent R2 applied on the upper disk single sheet D2 shall be kept around 4 - 5g.

Now, adjusting the flow of the adhesive agent supplied through the nozzle N can change the size of the ring of adhesive agent on the lower disk single sheet.

And the diameter of the doughnut of adhesive agent can be made larger or smaller by displacing the nozzle N.

It is preferable that the diameter of the doughnut of adhesive agent R1 applied on the lower disk single sheet would be made larger than that of the doughnut of adhesive agent R2 applied on the upper disk single sheet mentioned below.

And it is also preferable that the size of the doughnut of adhesive agent R1 applied on the lower disk single sheet D1 would be larger than the size of the doughnut of adhesive agent R2 applied on the upper disk single sheet D2.

### [Step of Placing the Upper Disk Single Sheet]

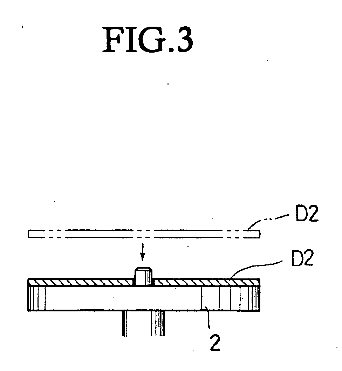

An upper disk single sheet D2 is placed on the turntable 2 different from the turntable 1 on which the lower disk single sheet D1 is placed (See Fig. 3).

### [Step of Applying Adhesive Agent on the Upper Disk Single Sheet]

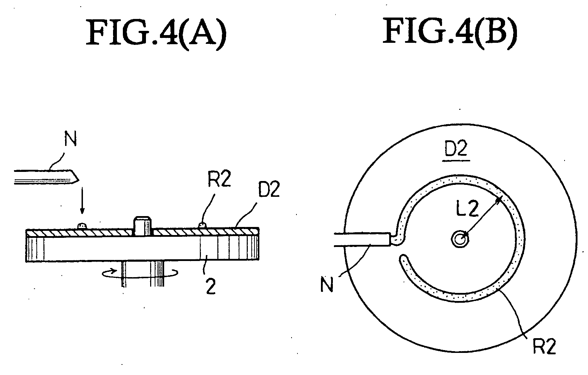

Then, the Adhesive Agent R2, in other words an ultraviolet rays curing resin is applied on the upper disk single sheet D2 (See Fig. 4).

For this application also, the turntable 2 is kept rotating, and when the adhesive agent R2 is discharged from the nozzle N, the adhesive agent R2 is applied in doughnut form on the surface of the upper disk single sheet D2.

In this case, the amount of the adhesive agent R2 applied on the upper disk single sheet D2 is reduced to a level lower than that of the adhesive agent R1 applied on the lower disk single sheet D1.

Here, it is preferable that the diameter of the doughnut of adhesive agent R2 applied on the upper disk single sheet D2 would be smaller than that of the doughnut of adhesive agent R1 applied on the lower disk single sheet D1.

It is also preferable that the size of the doughnut of adhesive agent R2 applied on the upper disk single sheet D2 would be smaller than that of the doughnut of adhesive agent R1 applied on the lower disk single sheet D1.

Like the application of the adhesive agent R1 on the lower disk single sheet D1, the diameter of the doughnut of the adhesive agent R2 and the flow of the adhesive agent R2 applied can be freely adjusted by means of the nozzle N.

### [Step of lamination]

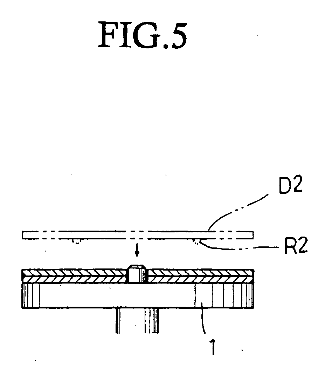

Then, the upper disk single sheet D2 is placed on the lower disk single sheet D1 to be laminated (See Fig. 5).

In this case, the upper disk single sheet D2 placed on another turntable 2 is removed to and placed on the lower disk single sheet D1 placed on the turntable 1.

The operation of lamination will be described in more details as follows:

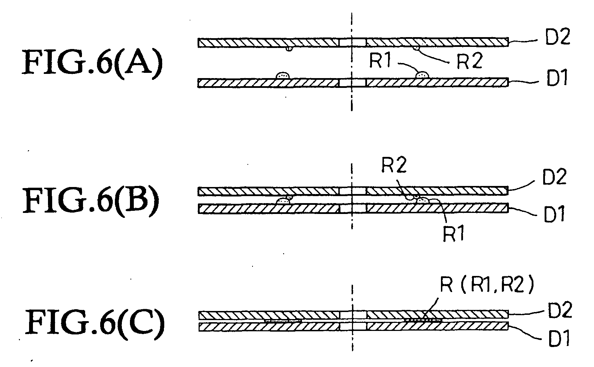

Fig. 6 consists of views showing the distance between the upper and lower disk single sheets D1 and D2 and their relations with the adhesive agent.

As shown in the figure, before their lamination, the diameter L1 of the adhesive agent R1 applied on the lower disk single sheet D1 is larger than the diameter L2 of the adhesive agent R2 applied on the upper disk- single sheet D2 (L1 > L2), and the size of the adhesive agent applied thereon is also larger (See Fig. 6 (A)).

In other words, the amount of the adhesive agent R2 applied on the upper disk single sheet D2 is smaller than that of the adhesive agent R1 applied on the lower disk single sheet D1.

As the distance between the upper and lower disk single sheets D1 and D2 diminishes from this state, at first the adhesive agent R2 of the upper disk single sheet D2 touches directly the adhesive agent R1 on the lower disk single sheet D1 (See Fig. 6 (B)).

As the distance between the upper and lower disk single sheets D1 and D2 further diminishes, the adhesive agents are compressed among themselves and are crushed mutually and finally the width of the adhesive agent R (R1 and R2) changes and grows larger (See Fig. (C)).

At this time, in stead of the initial contact between the hard disk surface and the adhesive agent of the prior art shown in Fig. 10, the adhesive agents touch between themselves in this invention and this is a contact between viscous adhesive agents.

Therefore, bubble contents are expelled, and the adhesive agent rarely contains air.

For this reason, any residual bubble contents subsequent to the spreading of the adhesive agent are reduced to the minimum, and after the cure of the adhesive agent the product quality will be high.

### [The Step of Curing the Adhesive Agent]

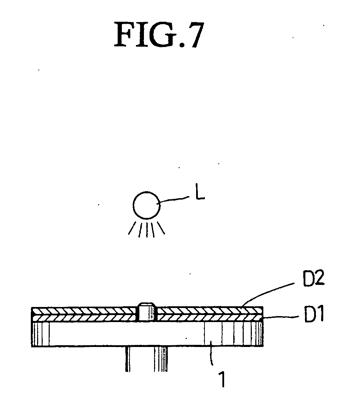

Then the adhesive agent is irradiated with ultraviolet rays to cure (See Fig. 7).

In this case, the adhesive agent may be irradiated with ultraviolet ray by a radiation apparatus L while it is place on the turntable 1, or at another stage, the upper and lower disk single sheets D1 and D2 may be placed on a separate platform 3 for irradiating with ultraviolet rays (normally disposed on a turntable T) and then they may be irradiated with ultraviolet rays.

Thus in this invention the adhesive agents are made to come into contact each other at the beginning and thus the direct contact between the surface of disk single sheets and adhesive agents observed in the past is avoided'. In this way, the phenomenon of catching air is removed, and the bubble content after the spreading of adhesive agent is reduced to the minimum.

The foregoing is the description of this invention, but this invention is not limited to the embodiments given herein. It is needless to say that a variety of other variations are possible, provided that they do not deviate from the essence of this invention.

The principle of this invention specifies the way of applying adhesive agent on both disk single sheets. The adhesive agents are made to touch between themselves, and the application mode of the adhesive agent can be diversified as long as this principle is satisfied.

### Industrial Applicability

This invention relates to the method of laminating optical disks, and relates in particular to a method of laminating optical disks wherein the formation of bubbles is reduced to the minimum. However, this invention can be applied to the technique of laminating sheet materials other than optical disks in any field wherein a similar effect can be expected provided that it does not deviate from this principle.

## Claims

1. A method of laminating optical disks (D) wherein two disk single sheets, upper and lower, are integrated by curing the adhesive agent lying between both disk single sheets wherein
an adhesive agent applied on the lower disk single sheet (D1) and an adhesive agent applied on the upper disk single sheet (D2) are applied in such a manner that both adhesive agents may first come in contact each other.

2. The method of laminating optical disks according to claim 1 wherein the amount of the adhesive agent applied on the upper disk single sheet (D2) is smaller than that of the adhesive agent applied on the lower disk single sheet (D1).

3. The method of laminating optical disks according to claim 1 wherein a doughnut of adhesive agent of a smaller diameter than the diameter of the doughnut of adhesive agent of the lower disk single sheet (D1) is applied on the upper disk single sheet (D2).

4. The method of laminating optical disks according to claim 1 wherein a doughnut of adhesive agent of a larger diameter than the diameter of the doughnut of adhesive agent of the lower disk single sheet is applied on the upper disk single sheet.

5. The method of laminating optical disks according to claim 1 wherein the adhesive agent is irradiated with ultraviolet rays to cure the same.

6. A method of laminating optical disks comprising:
the step of placing a lower disk single sheet (D1) on a turntable, the step of applying the adhesive agent in doughnut form on the lower disk single sheet (D1);
the step of placing an upper disk single sheet (D2) on another turntable;
the step of applying the adhesive agent in doughnut form on the upper disk single sheet, and the step of spreading the adhesive agent lying between both disk single sheets by rotating the turntable.

7. The method of laminating optical disks according to claim 6 wherein the amount of the adhesive agent applied on the upper disk single sheet ( D2 ) is smaller than that of the adhesive agent applied on the lower disk single sheet (D1).

8. The method of laminating optical disks according to claim 6 wherein a doughnut of adhesive agent of a smaller diameter than the diameter of the doughnut of adhesive agent of the lower disk single sheet (D1) is applied on the upper disk single sheet (D2).

9. The method of laminating optical disks according to claim 6 wherein a doughnut of adhesive agent of a larger diameter than the diameter of the doughnut of adhesive agent of the lower disk single sheet is applied on the upper disk single sheet.

10. The method of laminating optical disks according to claim 6 wherein the adhesive agent is irradiated with ultraviolet rays to cure the same.
